# EUROPEAN PATENT APPLICATION

(11) **EP 1 895 386 A1**
(43) Date of publication of application: **05.03.2008**
(21) Application number: 06300910.4
(22) Date of filing: 31.08.2006
(51) Int. Cl.: G06F 1/16

(54) **A flat screen assembly**

(71) Applicant: TCL Thomson Electronics Europe SAS, 49002 Angers Cedex 01 (FR)
(72) Inventor: Allaire, Christian, 49800 La Dagueniere (FR); De Oliveira, Joaquim, 49380 Notre Dame d'Allençon (FR); Delande, Laurent, 49610 Saint Mélaine sur Aubance (FR); Crougneau, Alain, 49100 Angers (FR)

(57) **Abstract**

A known flat screen assembly comprises a flat screen panel (1), e.g. a LCD panel (1), a housing with at least a back cover and a front cover (3) and with connection means.

It further comprises at least one spring (10) for connecting one part of the three the flat screen (1) or the back cover or the front cover (3) with another part. The spring (10) is arranged to be able to move at the one of the three parts by connection means for this part. The spring (10) is able to move from a release position (R) into a fixing position (F). In the fixing position (F), the spring (10) engages further connection means for the other of the three parts.

## Description

### 1. Field of the invention

The present invention is related to a flat screen assembly according to the preamble of claim 1. Flat screen assemblies which themselves comprise flat screens and housings, with at least a back cover and a front cover, are used for computers and TV apparatuses, in particular for portable computers and portable TV apparatuses.

### 2. Description of the prior art

A flat screen assembly for a portable computer is described by the Patent Abstract of Japan JP2000-047754. The flat screen assembly, mentioned as the display unit, comprises a flat screen, namely a LCD panel, and an LCD cover. The LCD panel is fitted to the LCD cover by support members. Some of the support members have a part, such as a leaf spring part or a lug part, which is able to deform elastically along the screen.

The connections between the LCD panel and the support members and between the support members and the cover are attached by screws. The spring force, of the elastic parts of the support members, is directed in a longitudinal direction of the LCD screen, e.g. parallel to the screen surface.

A minimum of three parts of the cover and the LCD panel are connected by the numerous screws. A certain gap between the LCD panel and the LCD cover must be present in the arrangement of the support members and the numerous screws. As a result, a frame part of the LCD cover requires a set width around the screen surface.

### 3. Summary of the invention

It is therefore desirable to improve a flat screen assembly according to the preamble of claim 1, with respect to the gap between the flat screen panel and the housing.

According to the invention this can be achieved by the features of claim 1.

A flat screen assembly of the invention comprises a flat screen panel, e.g. an LCD panel, and a housing with a back cover and a front cover and with connection means. According to the invention the assembly is equipped with at least one spring for connecting one part of the following three parts with another, the flat screen, the back cover and the front cover. The spring is arranged at the one part by connection means to be able to move from a release position into a fixing position. When the spring is in the fixing position, it engages further connection means, which are connected with the other of the three parts.

The connections between two of the three parts in their final linking positions can be carried out simply by a slight movement of the spring. The lower number of connection components, in particular screws, results in a smaller gap between the LCD panel and the housing.

Possible advantageous developments of the invention are specified in the dependent claims.

The connection means can be generated by guiding means, in which at least one end of the spring is guided. Guiding means can form at least one shaft.

The connection means can be advantageously generated by snapping means. The snapping means can be generated by at least one snapping element formed by the corresponding part of the three parts itself. Alternatively, the snapping means can be generated by at least one support, which forms at least one snapping element and which is connected to the corresponding part.

In the fixing position, a force of the spring can be directed in a transversal direction of the flat screen. In this transversal direction, the spring can press the parts together and can improve the stability of the assembly. In addition, the strain on the LCD panel in a longitudinal direction can be relieved.

Advantageously, the spring can be generated by a wire shaped in a way that a force of the spring perpendicular to its connection direction is executed.

A flat screen assembly can comprise two springs, which connect the two parts of the three at two opposite sides of the flat screen.

Advantageously, the one part is generated by the front cover and the other part is generated by the flat screen panel.

### 4. Brief description of the drawings

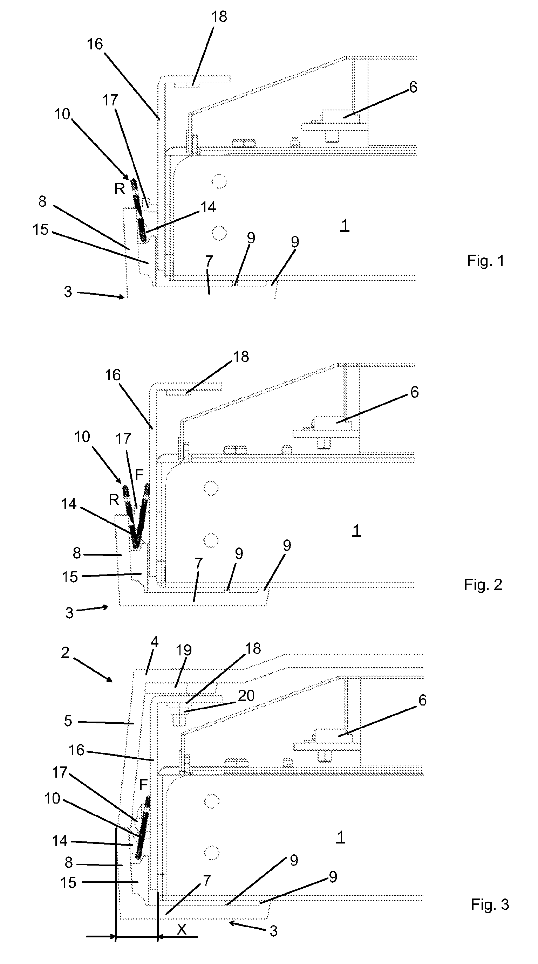

The invention will be explained in more detail using one embodiment, which is illustrated in figures 1 to 9.

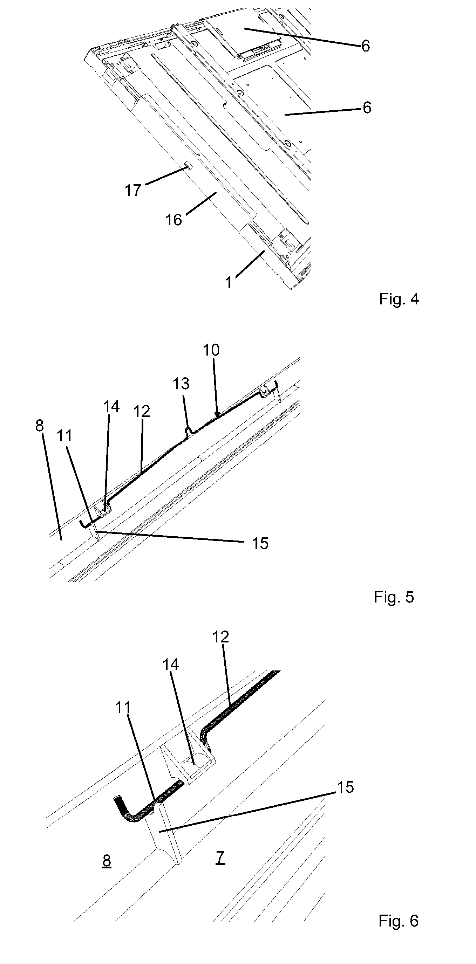

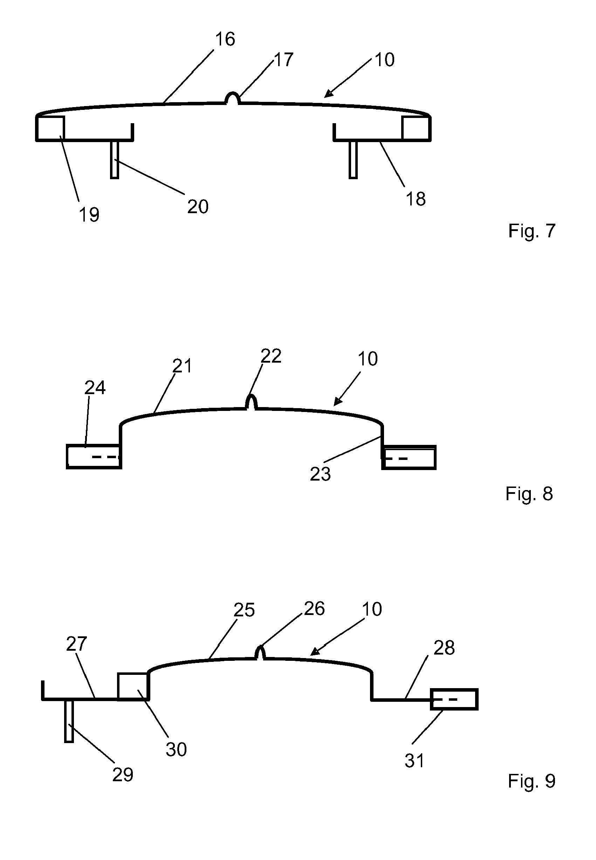

It shows:
■ Figure 1, a simplified cross section of the embodiment of the invention at one edge without a back cover and with a spring in a release position;
■ Figure 2, a simplified cross section according to figure 1 with the spring in a fixing position;
■ Figure 3, a simplified cross section according to figure 1 and 2 with the back cover;
■ Figure 4, a simplified perspective view of the flat screen panel, only;
■ Figure 5, a cut-out of the front cover with the spring;
■ Figure 6, an additional cut-out of the front cover with an outer part of the spring;
■ Figure 7, a simplified view of an alternative spring with corresponding connection means;
■ Figure 8, a simplified view of another alternative spring with corresponding connection means; and
■ Figure 9, a simplified view of a further alternative spring with corresponding connection means.

### 5. Detailed description of the invention.

A flat screen assembly of an embodiment of the invention comprises a flat screen panel, which is generated by a LCD panel 1, and a housing with at least a back cover 2 and a front cover 3. The arrangement of all three parts is seen in the partial view of **figure 3**, which shows only one of the four edges of the assembly.

The cavity-shaped back cover 2 comprises a bottom 4 and four side walls 5. The bottom 4 covers the rear of the LCD panel 1 and some further components 6, which are arranged at the rear of the LCD panel 1. The side walls 5 extend over the sides of the LCD panel 1 and at least two of them end close to the middle of the corresponding sides of the LCD panel 1. The front cover 3 comprises a frame 7 and four side walls 8, which extend over the sides of the LCD panel 1. All side walls 8 fit with the corresponding side walls 5 of the back cover 2. As a result, at least two of the side walls 8 end close to the middle of the corresponding sides of the LCD panel 1 and fit with the corresponding side walls 5 of the back cover 2.

The frame 7 frames the front side of the LCD panel 1 and fits with the front side of the LCD panel 1 with two path-formed projections 9 toward the LCD panel 1, one projection 9 located at the inner edge of the frame 7 and the other in a set distance from the inner edge.

According to the invention the flat screen assembly comprises a spring 10. The spring 10 is arranged at the front cover 3, by connection means for the front cover 3, to be able to move. It is able to move from a release position R into a fixing position F. In the fixing position F, the spring 10 engages connection means for the LCD panel 1. As a result, the spring 10 connects the front cover 3 with the LCD panel 1 in their final linking positions.

The spring 10 is generated by a wire shaped similarly to an elongated Ω. The spring 10 has two outer parts 11, the feet of the Ω, at which it is arranged to be able to move at the front cover 3, and an inner borrow-shaped part 12, the loop of the Ω. Both of the outer parts 11 and the inner part 12 are elongated. The loop of the inner part 12 is located at the centre as a top 13 of the inner part 12.

The connection means for the front cover 3 are generated by snapping means with four snapping elements 14, 15. The snapping elements 14, 15 are generated by one of the side walls 8 of the front cover 3. They are trough-shaped projections and are arranged at both sides of a line parallel to the edge between the side wall 8 and the frame 7.

Each of the outer parts 11 of the spring 10 is formed as an elongated L. Both outer parts 11 are arranged vis-à-vis with the shorter L-parts at their outer ends. The shorter L-parts are directed to the top 13 of the spring 10. Each longer L-part is engaged between two snapping elements 14, 15. Every two of the four snapping elements 14, 15 are provided for each of the outer parts 11 of the spring 10. As a result, when the spring 10 is arranged at the side wall 8 of the front cover 3, the outer parts 11 of the spring 10 are engaged in the troughs of the snapping elements 14, 15. This is shown in detail in **figures 5 and 6.**

The connection means for the LCD panel 1 are generated by snapping means with a support 16 which comprises a snapping element 17. The support 16 is shown in detail in **figure 4**. The snapping element 17 is generated by a hooked projection of the support 16. The snapping element 17 is located at a base of an opening of the support 16. The width of the projection corresponds to the width of the loop at the top 13 of the spring 10, in a way that the top 13 can pass the front part of the hooked snapping element 17 in order to move into the fixing position F.

The support 16 is further provided for generating a screwed connection with the back cover 2. The support 16 extends in an L-shape with one side along the side of the LCD panel 1 and with the other side of the L over the rear of the LCD panel 1. The side of the support 16, which is located over the rear of the LCD panel 1, is comprised with at least one opening with a nut 18. The back cover 2, which has at least one corresponding opening and a washer 19, is connected to the support 16 by at least one screw 20 as shown in figure 3.

At an opposite side of the LCD panel 1, not shown in the drawings, the assembly comprises a second spring 10, which also connects the front cover 3 with the LCD panel 1. The structure of the assembly at the opposite side corresponds to the structure mentioned above.

In the release position R, the shorter L-parts of the outer parts 11 touch the side wall 8 of the front cover 3. The top 13 of the spring 10 is directed away from the LCD panel 1. This is shown in **figures 1 and 2**.

In the fixing position F, the spring 10, in particular its top 13, is angled some degrees towards the LCD panel 1 and engages the snapping element 17. This is shown in figure 3.

In the fixing position F, a force of the spring 10 is directed toward the frame 7 of the front cover 3. As a result, the force is directed perpendicular to the surface of the LCD panel 1, e.g. in a transversal direction of the LCD panel 1.

The gap, which is necessary for the spring 10, the snapping elements 14, 15 and the support 16 with the snapping element 17, is very small. As a result, the required distance X between the LCD panel 1 and the front cover 3 is minimal.

In order to assemble the three parts of the flat screen assembly, the two springs 10 are snapped in the snapping elements 14, 15 at the two opposite sides of the front cover 3. The LCD panel 1 with the two supports 16 is laid down on the frame 7 of the front cover 3. Further, the two springs 10 are turned from their release positions R to their fixing positions F and snapped in the snapping elements 17. The LCD panel 1 and the front cover 3 are connected in their final linking positions. Finally, the back cover 2 is connected to both of the LCD panel 1 and the front cover 3, in particular to the support 16 using two screws 12.

As an alternative, which is shown in **figure 7**, the spring 10 can be generated by a wire with a different shape. This spring 10 has a borrow-shaped upper part 16 with a top 17 at its centre and two lower parts 18, which are formed due to the both ends of the wire. Each of the lower parts 18 is formed as an elongated L. Both lower parts 18 are arranged vis-à-vis with the shorter L-parts at their inner ends. The shorter L-parts are directed to the top 17 of the spring 10. Each longer L-part is engaged between two snapping elements 19, 20, which can correspond to the snapping elements 14, 15, and connected to the upper part 16 via a connection part, which is perpendicular to the longer L-part.

As another alternative, which is shown in **figure 8**, the spring 10 can be generated by a wire with another shape. This spring 10 has a borrow part 21 with a top 22 at its centre and two cascaded parts 23 at its outer ends. The corresponding connection means can be generated by guiding means. The guiding means comprise e.g. two shafts 24, which are arranged in a longitudinal direction referred to the LCD panel 1 and in which both ends of borrow-shaped spring 10, e.g. the ends of the cascaded parts 23, are guided.

As a further alternative, which is shown in **figure 9**, the spring 10 can be generated by a wire with a further shape. This spring 10 has an inner part 25 with a top 26, similar to the inner part 12 or to the borrow part 21, and, at its outer ends, one L-shaped outer part 27, similar to the outer parts 11, and one cascaded outer part 28, similar to the cascaded parts 23. The corresponding connection means are generated by snapping means 29, 30 for the L-shaped outer part 27 and by a shaft 31 for the cascaded outer part 28.

## Claims

1. A flat screen assembly comprising a flat screen panel (1), a housing with at least a back cover (2) and a front cover (3) and with connection means,
**characterized in** comprising at least one spring (10), for connecting one of the three parts, the flat screen (1), the back cover (2) and the front cover (3) with another part, which is arranged at the one part by connection means, which is able to move from a release position (R) into a fixing position (F) and which, in the fixing position (F), engages further connection means for the other part.

2. A flat screen assembly according to claim 1, **characterized in that** the connection means are generated by guiding means.

3. A flat screen assembly according to claim 1, **characterized in that** the connection means are generated by snapping means.

4. A flat screen assembly according to claim 3, **characterized in that** the snapping means are generated by at least one snapping element (14, 15) formed by the corresponding part itself.

5. A flat screen assembly according to claim 3, **characterized in that** the snapping means are generated by at least one support (16), which forms at least one snapping element (17) and which is connected to the corresponding part.

6. A flat screen assembly according to one of the claims 1 to 5, **characterized in that**, in the fixing position (F), a force of the spring (10) is directed in a transversal direction of the flat screen (1).

7. A flat screen assembly according to one of the claims 1 to 6, **characterized in that** the spring (10) is generated by a shaped wire.

8. A flat screen assembly according to one of the claims 1 to 7, **characterized in** comprising two springs which connect the two parts at two opposite sides of the flat screen (1).

9. A flat screen assembly according to one of the claims 1 to 8, **characterized in that** the one part is generated by the front cover (3) and the other part is generated by the flat screen (1).
